# EUROPÄISCHE PATENTSCHRIFT

(11) **EP 2 985 216 B1**
(45) Veröffentlichungstag und Bekanntmachung des Hinweises auf die Patenterteilung: **01.08.2018**
(21) Anmeldenummer: 15180658.5
(22) Anmeldetag: 11.08.2015
(51) Int. Cl.: B62L 3/02, B62K 23/06

(54) **HANDBETÄTIGTE GEBEREINHEIT**
MANUALLY OPERATED ACTUATOR
ACTIONNEUR COMMANDE MANUELLEMENT

(30) Priorität: 14.08.2014 DE 102014111641
(43) Veröffentlichungstag der Anmeldung: 17.02.2016
(73) Patentinhaber: Gustav Magenwirth GmbH & Co. KG, 72574 Bad Urach (DE)
(72) Erfinder: Hujer, Joachim, 72582 Grabenstetten (DE)
(74) Vertreter: Hoeger, Stellrecht & Partner Patentanwälte mbB

(56) Entgegenhaltungen:
- EP-A2- 1 894 802
- WO-A1-2006/070417
- US-A- 5 813 501
- US-A1- 2009 205 330
- US-B1- 6 318 514

## Beschreibung

Die Erfindung betrifft eine handbetätigte Gebereinheit für Fahrzeuge, insbesondere für lenkergeführte Fahrzeuge, umfassend ein Gehäuse, einen in dem Gehäuse vorgesehenen Geberzylinder, einen relativ zu dem Gehäuse bewegbaren Betätigungshebel und einen eine Bewegung des Betätigungshebels auf den Geberzylinder übertragenden Stößel, der an dem Betätigungshebel gelagert ist.

Derartige handbetätigte Gebereinheiten sind aus dem Stand der Technik bekannt. Dokument US 5 813 501 A offenbart die Präambel des Anspruchs 1. Der Erfindung liegt die Aufgabe zugrunde, eine derartige Gebereinheit möglichst kostengünstig und funktionell auszubilden.

Diese Aufgabe wird bei einer Gebereinheit der eingangs beschriebenen Art erfindungsgemäß dadurch gelöst, dass an dem Gehäuse eine Griffweitenverstelleinrichtung für den Betätigungshebel vorgesehen ist, mit welcher eine jeweilige Ausgangsstellung des Betätigungshebels vorgebbar ist.

Der Vorteil der erfindungsgemäßen Lösung ist dabei darin zu sehen, dass durch eine derartige Griffweitenverstellung der jeweilige Nutzer der handbetätigten Gebereinrichtung die für ihn günstige Ausgangsstellung, insbesondere eine für eine Hand des Nutzers günstige Ausgangsstellung, des Betätigungshebels relativ zum Lenker einstellen kann. Erfindungsgemäß ist dabei eine derartige Griffweitenverstelleinrichtung so ausgebildet, dass diese ein relativ zu dem Gehäuse bewegbares Einstellelement umfasst, mit welchem die jeweilige Ausgangsstellung einstellbar ist.

Dabei kann das Einstellelement in unterschiedlichster Art und Weise bewegbar am Gehäuse angeordnet oder gelagert sein.

Beispielsweise wäre es denkbar, das Einstellelement drehbar am Gehäuse zu lagern, so dass durch Verdrehen des Einstellelements verschiedene Ausgangsstellungen des Betätigungshebels vorgebbar sind.

Eine konstruktiv und insbesondere hinsichtlich des Raumbedarfs erfindungsgemäße Lösung sieht vor, dass das Einstellelement an dem Gehäuse verschiebbar angeordnet ist.

Eine derartige verschiebbare Anordnung des Einstellelements relativ zum Gehäuse hat den Vorteil, dass bei dieser Anordnung der Raumbedarf für die Griffweitenverstelleinheit gering gehalten werden kann.

Eine besonders günstige Lösung sieht vor, dass das Einstellelement relativ zur Schwenkachse des Betätigungshebels in verschiedene einen unterschiedlichen Abstand von der Schwenkachse aufweisende Stellungen bringbar ist, welche die verschiedenen Ausgangsstellungen festlegen, die ihrerseits verschiedenen Griffweiten entsprechen.

Hinsichtlich der Ausbildung des Einstellelements selbst wurden bislang keine näheren Angaben gemacht.

Insbesondere wurden keine näheren Angaben zum Zusammenwirken des Einstellelements mit dem Betätigungshebel zur Einstellung der verschiedenen Ausgangsstellungen gemacht.

So sieht die erfindungsgemäße Lösung vor, dass das Einstellelement mindestens eine Anschlagfläche für einen Anschlagarm des Betätigungshebels aufweist.

Dabei könnte die mindestens eine Anschlagfläche so ausgebildet sein, dass sie eine kontinuierlich variierende und insbesondere dadurch unterschiedliche Winkelabstände des Betätigungshebels von einer Halteeinheit vorgebende Fläche ist, auf welcher der Anschlagarm zur Einstellung der verschiedenen Ausgangsstellungen auf verschiedenen Flächenbereichen aufliegt.

Eine besonders vorteilhafte Ausführungsform sieht vor, dass das Einstellelement verschiedene Anschlagflächen aufweist, die insbesondere unterschiedliche Winkelabstände des Betätigungshebels von einer Halteeinheit vorgeben, und die verschiedenen Ausgangsstellungen des Betätigungshebels zugeordnet sind.

Beispielsweise können derartige verschiedene Anschlagflächen als relativ zueinander versetzte Flächen oder Flächenbereiche ausgebildet sein, mit denen der Anschlagarm in der jeweiligen Ausgangsstellung zusammenwirkt.

In diesem Fall ist zweckmäßigerweise vorgesehen, dass durch das Bewegen des Einstellelements jeweils eine der Anschlagflächen in eine mit dem Anschlagarm zusammenwirkende aktive Stellung bringbar ist, in welcher eine Festlegung der jeweiligen Ausgangsstellung des Betätigungshebels erfolgt.

Hinsichtlich der Festlegung der verschiedenen Stellungen des Einstellelements zum Erreichen der verschiedenen Ausgangsstellungen des Betätigungshebels wurden im Zusammenhang mit der bisherigen Erläuterung der einzelnen Ausführungsbeispiele keine näheren Angaben gemacht.

Beispielsweise wäre es denkbar, eine selbsthemmende Verstelleinrichtung vorzusehen.

Eine andere Möglichkeit wäre, das Einstellelement beispielsweise mit einer Schraube in verschiedenen Stellungen festzulegen.

Eine besonders günstige Lösung sieht vor, dass das Einstellelement der Griffweitenverstelleinrichtung durch eine Rasteinrichtung in den verschiedenen Stellungen festlegbar ist.

Der Vorteil dieser Lösung ist darin zu sehen, dass dadurch in besonders einfacher Weise eine werkzeuglose Griffweitenverstellung möglich ist, da die Rasteinrichtung so ausgelegt werden kann, dass sie werkzeuglos und somit lediglich manuell ein Erreichen der verschiedenen Stellungen zulässt.

Insbesondere ist dabei vorgesehen, dass die Rasteinrichtung zwei zusammenwirkende Rastelemente umfasst, von denen eines mit dem Gehäuse und ein anderes mit dem Einstellelement verbunden ist, so dass damit in einfacher Weise das Einstellelement relativ zu dem Gehäuse in den verschiedenen Stellungen festgelegt werden kann.

Die Rastelemente können dabei in unterschiedlichster Art und Weise ausgebildet sein.

Eine vorteilhafte Lösung sieht vor, dass ein erstes Rastelement einen Vorsprung aufweist und dass ein zweites Rastelement verschiedene Rastflächen zur Festlegung der verschiedenen Stellungen des Einstellelements aufweist.

Bei dieser Ausbildung der Rastelemente wirkt vorzugsweise der Vorsprung mit jeweils einer der Rastflächen zur Festlegung der jeweiligen Stellung zusammen und zum Erreichen verschiedener Stellungen wird der Vorsprung zu den verschiedenen Rastflächen bewegt.

Hinsichtlich der Ausführung der Rastbewegung wurden im Zusammenhang mit der Ausbildung der Rastelemente keine näheren Angaben gemacht.

So ist zweckmäßigerweise vorgesehen, dass eines der Rastelemente eine federnde Zunge umfasst, welche es ermöglicht, die Rastelemente relativ zueinander von einer Raststellung in die andere Raststellung zu bewegen. Vorzugsweise sind bei der erfindungsgemäßen Lösung das zweite Rastelement mit dem Einstellelement verbunden und das erste Rastelement mit dem Gehäuse.

Ferner ist zweckmäßigerweise vorgesehen, dass das zweite Rastelement die federnde Zunge umfasst, welche die mehreren Rastflächen trägt.

Ferner wurden im Zusammenhang mit der bisherigen Lösung auch noch keine näheren Angaben über die Anordnung des Einstellelements am Gehäuse gemacht.

So sieht eine vorteilhafte Lösung vor, dass das Einstellelement durch eine Führung an dem Gehäuse geführt ist und damit in einer Führungsrichtung relativ zu dem Gehäuse definiert bewegbar ist.

Beispielsweise ist die Führung so ausgebildet, dass sie einerseits Führungskörper und andererseits Führungsnuten umfasst, wobei durch die Führungsnuten die Führungsrichtung vorgegeben ist.

Beispielsweise ist vorgesehen, dass das Einstellelement die Führungskörper und dass die Führungsnuten an dem Gehäuse angeordnet sind.

Hinsichtlich der Führungsrichtung für die Bewegbarkeit des Einstellelements wurden bislang keine näheren Angaben gemacht.

So sieht eine besonders kompakt bauende Lösung vor, dass das Einstellelement durch die Führung in einer Führungsrichtung ungefähr parallel zu dem Geberzylinder bewegbar ist, so dass dabei das Gehäuse klein und kompakt ausgeführt werden kann.

Unter ungefähr parallel ist dabei zu verstehen, dass die Abweichung der Führungsrichtung von einem parallelen Verlauf 20° oder weniger beträgt.

Alternativ oder ergänzend zu den bislang beschriebenen Merkmalen wird die eingangs beschriebenen Aufgabe erfindungsgemäß bei einer Gebereinheit der eingangs beschriebenen Art auch dadurch gelöst, dass der Stößel durch eine Gewindeführung relativ zum Betätigungshebel verstellbar ist, dass die Gewindeführung ein an dem Stößel vorgesehenes Außengewinde umfasst, welches in ein stationär am Druckarm des Betätigungshebels angeordnetes Innengewinde eingreift, dass der Stößel ein Drehbetätigungselement aufweist und dass an dem Betätigungshebel ein erstes Rastelement angeordnet ist, welches mit einem zweiten, am Stößel vorgesehenen Rastelement zusammenwirkt und einzelne Drehstellungen des Stößels festlegt.

Der Vorteil dieser erfindungsgemäßen Lösung ist darin zu sehen, dass mit dieser eine besonders einfach zu realisierende und hinsichtlich der Funktionssicherheit zuverlässige Lösung geschaffen ist.

Besonders günstig ist es dabei, wenn das zweite Rastelement mit dem Drehbetätigungselement verbunden ist, so dass durch das Drehbetätigungselement auch das zweite Rastelement drehbar ist.

Eine noch einfachere und vorteilhafte Lösung sieht vor, dass das zweite Rastelement an das Drehbetätigungselement angeformt ist.

Eine besonders vorteilhafte Lösung sieht vor, dass das zweite Rastelement durch das Drehbetätigungselement selbst gebildet ist.

Diese Lösung ist besonders vorteilhaft, da sie als zweites Rastelement kein separates Teil erfordert, sondern das zweite Rastelement durch das Drehbetätigungselement selbst, beispielsweise durch Griffmulden des Betätigungselements selbst, gebildet werden kann, so dass einerseits eine kostengünstige und andererseits eine raumsparende Lösung vorliegt.

Hinsichtlich der Ausbildung des ersten Rastelements wurden bislang keine näheren Angaben gemacht.

So sieht eine vorteilhafte Lösung vor, dass das erste Rastelement eine Rastnase aufweist.

Die Rastnase könnte beispielsweise stationär am Betätigungshebel angeordnet sein und es könnte beispielsweise das zweite Rastelement mit der notwendigen Flexibilität ausgebildet sein, so dass sich dieses Verformen kann, um dem ersten Rastelement verschiedene Raststellungen relativ zum zweiten Rastelement zu ermöglichen.

Eine besonders günstige Lösung sieht jedoch vor, dass das erste Rastelement eine die Rastnase tragende federnde Zunge aufweist.

Durch eine derartige federnde Zunge besteht die Möglichkeit, die federelastische Bewegung für das Verrasten des ersten Rastelements und des zweiten Rastelements in verschiedene Stellungen durch das erste Rastelement zu realisieren.

Beispielsweise könnte dabei die federnde Zunge relativ zum Betätigungshebel beliebig ausgebildet sein.

Ist beispielsweise der Betätigungshebel aus Metall hergestellt, so ist vorgesehen, dass die federnde Zunge an dem Betätigungshebel, beispielsweise durch ein Verklemmen, Vernieten oder Verschrauben gehalten ist.

Eine besonders vorteilhafte Lösung sieht jedoch vor, dass das erste Rastelement einstückig an den Betätigungshebel angeformt ist.

Dies ist bei einem aus beliebigen Materialien hergestellten Betätigungshebel einfach dann zu realisieren, wenn das erste Rastelement keine federelastische Bewegung relativ zum zweiten Rastelement ausführen soll.

Im Falle eines ersten Rastelements, welches eine federelastische Bewegung ausführen soll, ist in diesem Fall zweckmäßigerweise vorgesehen, dass der Betätigungshebel aus einem Material ist, welches die Ausbildung des elastisch bewegbaren Rastelements erlaubt.

Dies ist beispielsweise der Fall, wenn der Betätigungshebel aus Kunststoff ausgebildet ist.

Ferner ist bei einer Ausbildung des ersten Rastelements derart, dass dieses eine federelastische Bewegung relativ zum Betätigungshebel ausführen kann, vorteilhafterweise vorgesehen, dass das erste Rastelement in eine Ausnehmung des Betätigungshebels hinein bewegbar ist, um beispielsweise eine federelastische Ausweichbewegung beim Übergang zwischen verschiedenen Raststellungen des zweiten Rastelements ausführen zu können.

Auch diese Lösung ist besonders einfach und raumsparend realisierbar, wenn das Betätigungselement aus Kunststoff hergestellt ist.

Im Zusammenhang mit den bislang beschriebenen Ausführungsbeispielen wurden keine Ausführungen darüber gemacht, wie der Betätigungshebel in der jeweiligen Ausgangsstellung gehalten werden soll.

Besonders vorteilhaft ist es dabei, wenn der Betätigungshebel in Richtung der jeweiligen Ausgangsstellung federbeaufschlagt ist und dadurch im unbetätigten Zustand in dieser gehalten ist, das heißt, dass der Betätigungshebel im unbetätigten Zustand stets selbsttätig in die Ausgangsstellung übergeht.

Hierzu kann eine separate Federeinheit vorgesehen sein, die den Betätigungshebel selbsttätig jeweils in die Ausgangsstellung bewegt.

Eine besonders vorteilhafte Lösung sieht jedoch vor, dass der Betätigungshebel durch den Geberzylinder in Richtung der Ausgangsstellung beaufschlagt ist und somit der Geberzylinder selbst so auf den Betätigungshebel einwirkt, dass dieser jeweils die Ausgangsstellung einnimmt.

Diese Lösung hat darüber hinaus noch den Vorteil, dass dadurch die jeweilige Ausgangsstellung des Betätigungshebels gleichzeitig eine Ausgangsstellung für den Geberzylinder darstellt.

Somit ist der Ausgangsstellung des Betätigungshebels stets eine entsprechende Ausgangsstellung des Geberzylinders zugeordnet.

Diese Ausgangsstellung des Geberzylinders kann dabei jedoch ebenfalls durch die Verstellbarkeit des Stößels eingestellt werden.

Insbesondere lässt sich eine derartige Einwirkung des Geberzylinders auf den Betätigungshebel dadurch realisieren, dass der Geberzylinder mit einem federelastischen Element versehen ist, welches den Geberzylinder stets in seine den Betätigungshebel in die Ausgangsstellung führende Richtung beaufschlagt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht auf eine an einem Lenkerabschnitt montierte Gebereinheit;
- Fig. 2: einen Längsschnitt durch die Gebereinheit in Fig. 1 in einer zur Zeichenebene in Fig. 1 parallelen Schnittebene;
- Fig. 3: eine perspektivische Ansicht eines Druckarms des Betätigungshebels in Richtung des Pfeils A in Fig. 1;
- Fig. 4: einen vergrößerten Längsschnitt durch den Betätigungshebel im Bereich des Druckarms jedoch ohne Stößel;
- Fig. 5: einen Schnitt ähnlich Fig. 4 mit Stößel;
- Fig. 6: einen Schnitt längs Linie 6-6 in Fig. 5;
- Fig. 7: einen vergrößerten Längsschnitt ähnlich Fig. 2 durch ein Gehäuse der Gebereinheit mitsamt einem Teil des Betätigungshebels und einem an diesem vorgesehenen Stößel und einer Griffweitenverstelleinrichtung in einer Stellung entsprechend einer maximalen Griffweite;
- Fig. 8: einen Schnitt gemäß Fig. 7 bei einer Stellung der Griffweitenverstelleinrichtung in einer einer geringeren Griffweite entsprechenden Stellung;
- Fig. 9: eine Darstellung gemäß Fig. 7 mit der Griffweiteneinstelleinrichtung in einer einer minimalen Griffweite entsprechenden Stellung;
- Fig. 10: einen Schnitt ähnlich Fig. 2 in einer Stellung der Griffweitenverstelleinrichtung entsprechend einer mittleren Stellung gemäß Fig. 8;
- Fig. 11: einen Schnitt ähnlich Fig. 2 bei Stellung der Griffweitenverstelleinrichtung mit minimaler Griffweite entsprechend Fig. 9;
- Fig. 12: eine vergrößerte ausschnittsweise Darstellung der Griffweitenverstelleinrichtung entsprechend der Stellung bei maximaler Griffweite gemäß Fig. 7;
- Fig. 13: eine vergrößerte Darstellung der Griffweitenverstelleinrichtung in einer Stellung entsprechend der mittleren Griffweite gemäß Fig. 8;
- Fig. 14: eine vergrößerte Darstellung der Griffweitenverstelleinrichtung in einer Stellung entsprechend der minimalen Griffweite entsprechend Fig. 9 und
- Fig. 15: einen Schnitt längs Linie 15-15 in Fig. 1.

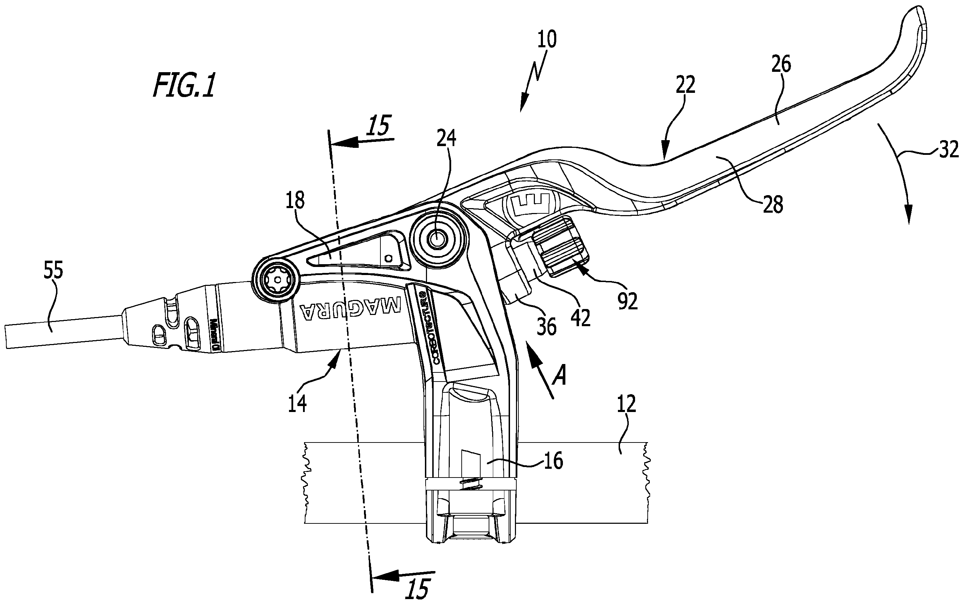

Ein in Fig. 1 dargestelltes Ausführungsbeispiel einer erfindungsgemäßen Gebereinrichtung 10 für Fahrzeuge, insbesondere für lenkergeführte Fahrzeuge, umfasst ein einem Lenker 12 des Fahrzeugs montierbares Gehäuse 14, welches eine an dem Lenker 12 klemmend fixierbare Halteeinheit 16 aufweist.

Ferner umfasst das Gehäuse 14 einen Gehäusekörper 18, an welchem ein Betätigungshebel 22 um eine Schwenkachse 24 schwenkbar gelagert ist, wobei der Betätigungshebel 22 einen manuell betätigbaren Griffarm 26 mit einer Grifffläche 28 zur manuellen Betätigung des Betätigungshebels 22 aufweist, wobei eine manuelle Beaufschlagung der Grifffläche 28 zu einem Verschenken des Betätigungshebels 22 um die Schwenkachse 24 ausgehend von einer Ausgangsstellung in einer Betätigungsrichtung 32 führt.

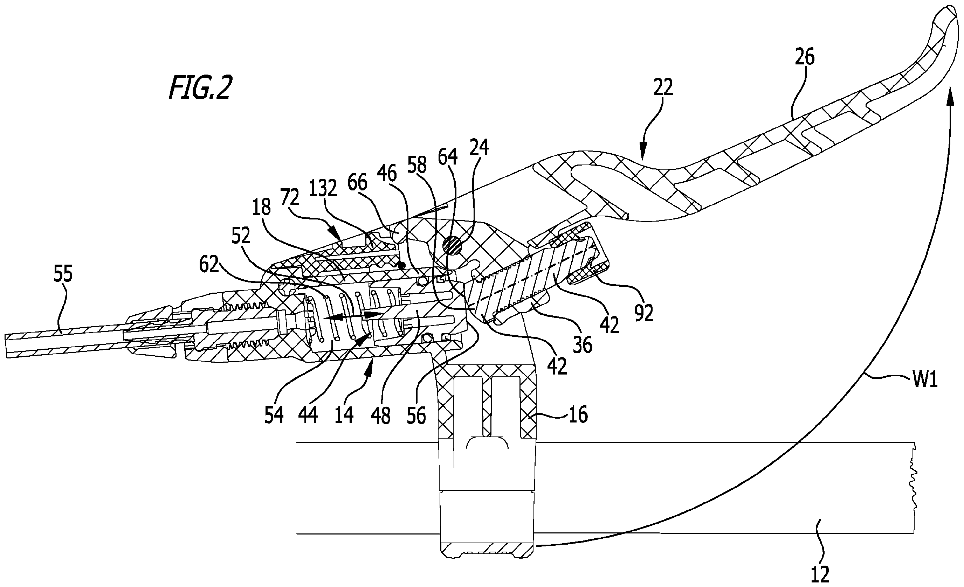

Wie in Fig. 1 und 2 dargestellt, umfasst der Betätigungshebel 22 neben dem Griffarm 26 noch einen Druckarm 36, an welchem ein als Ganzes mit 42 bezeichneter Stößel gelagert ist.

Mit dem Stößel 42 ist ein Geberzylinder 44 beaufschlagbar, welcher in dem Gehäusekörper 18 angeordnet ist.

Der Geberzylinder 44 wird vorzugsweise gebildet, durch ein in dem Gehäusekörper 18 angeordnetes, insbesondere einstückig in diesen ausgebildetes Zylindergehäuse 46, in welchem ein Kolben 48 in einer Bewegungsrichtung 52 bewegbar angeordnet ist, wobei das Zylindergehäuse 46 und der Kolben 48 eine Zylinderkammer 54 begrenzen, deren Volumen je nach Stellung des Kolbens 48 variiert, so dass im Falle eines in der Zylinderkammer 54 vorgesehenen Hydraulikmediums der Geberzylinder 44 als hydraulischer Geberzylinder arbeitet, mit welchem das Hydraulikmedium über eine Hydraulikleitung 55 einer Nehmereinheit, beispielsweise zur Betätigung einer Bremsvorrichtung zuführbar ist.

Zum Bewegen des Kolbens 48 in der Bewegungsrichtung 52 ist dieser mit einer Druckfläche 56 versehen, auf welche der Stößel 42 seinerseits mit einem Stößelkopf 58 einwirkt.

Ferner ist der Kolben 48 durch eine in der Zylinderkammer 54 angeordnete Druckfeder 62 in Richtung einer ein maximales Volumen der Zylinderkammer 54 vorgebenden Endstellung beaufschlagt, welche daher den Kolben 48 stets im Sinne einer Vergrößerung der Zylinderkammer 54 verschiebt, so dass der Kolben mit der Druckfläche 56 vorzugsweise stets auf eine gerundete Stößelkopffläche 64 des Stößelkopfs 58 wirkt und den Betätigungshebel 22 stets soweit verschwenkt, bis ein Anschlagarm 66 an einer Griffweitenverstelleinrichtung 72 anliegt, die ebenfalls in dem Gehäuse 14 vorgesehen ist und die die Ausgangsstellung des Betätigungshebels 22 festlegt.

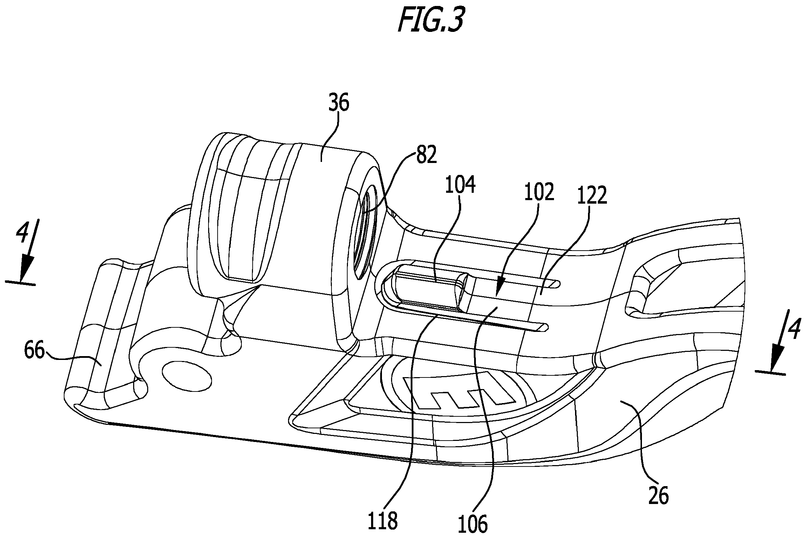

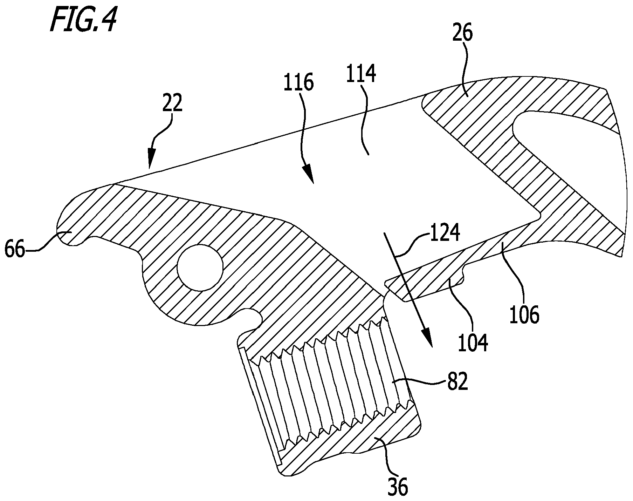

In den Fig. 3 bis 5 dargestellt, ist in dem Druckarm 36 selbst ein Innengewinde 82 vorgesehen, in welches ein Außengewinde 84 des Stößels 42 eingreift, so dass das Innengewinde 82 des Druckarms 36 und das Außengewinde 84 des Stößels 42 insgesamt eine Gewindeführung 86 bilden, durch welche der Stößel 42 in Richtung einer Längsachse 88 desselben, die gleichzeitig Mittelachse der Gewindeführung 86 ist, drehbar und verschiebbar ist, um den Abstand des Stößelkopfes 58 von dem Druckarm 36 einstellen zu können.

Zum Verdrehen des Stößels 42 ist dieser an seinem dem Stößelkopf 58 abgewandten Ende mit einem Drehbetätigungselement 92 versehen, welches drehfest auf einem dem Stößelkopf 58 gegenüberliegenden Endabschnitt 94 des Stößels 42 gehalten ist.

Somit liegen die Gewindeführung 86 und der Druckarm 36 zwischen dem Stößelkopf 58 und dem Drehbetätigungselement 92.

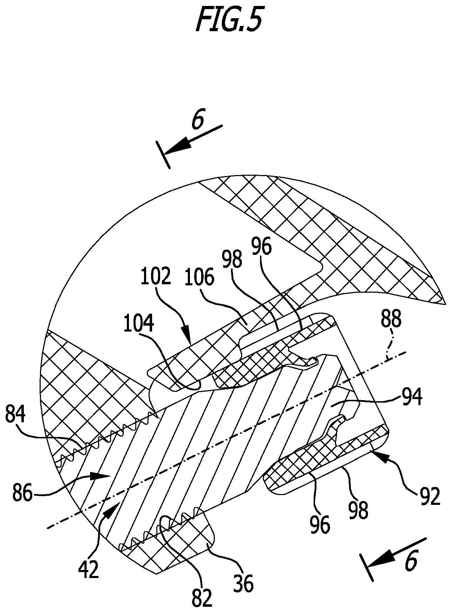

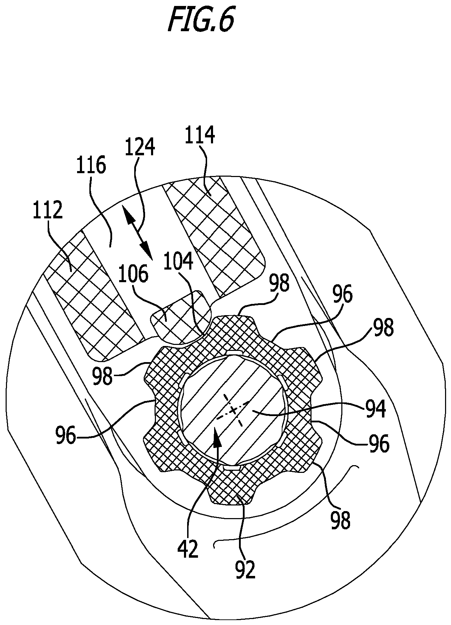

Das Drehbetätigungselement 92 ist dabei, wie in Fig. 5 und 6 dargestellt, umfangsseitig mit Griffmulden 96 versehen, die jeweils zwischen Erhebungen 98 des Drehbetätigungselements 92 liegen.

Durch die unmittelbare Anordnung des Innengewindes 82 der Gewindeführung 86 in dem Druckarm 36 ist auch die Ausrichtung der Längsachse 88 des Stößels 42 relativ zum Betätigungshebel 22 vorgegeben, so dass der Stößel 42 relativ zum Betätigungshebel 22 und insbesondere auch zum Griffarm 26 stets definiert ausgerichtet ist.

Aus diesem Grund ist vorzugsweise der Stößelkopf 58 mit der gerundeten Kopffläche 64 versehen, die auf die Druckfläche 56 des Kolbens 48 wirkt.

Um eine freie Drehbarkeit des Stößels 42 in der Gewindeführung 86 zu vermeiden, ist vorzugsweise ein Rastelement 102 vorgesehen, welches eine Rastnase 104 aufweist, die mit den Griffmulden 96 des Drehbetätigungselements 92 in Eingriff bringbar ist, um somit das Drehbetätigungselement 92 in einer Drehstellung festzulegen.

Die Rastnase 104 ist dabei vorzugsweise an einer elastisch bewegbar relativ zum Betätigungshebel 22, insbesondere zum Griffarm 26 des Betätigungshebels 22 bewegbaren Zunge 106 angeordnet.

Bei dem dargestellten Ausführungsbeispiel ist der Betätigungshebel 22 im Bereich des Griffarms 26 mit einer zwischen Seitenwangen 112 und 114 des Griffarms 26 liegenden Ausnehmung 116 versehen, die sich bis zu der Zunge 106 mit der Rastnase 104 erstreckt, wobei um die Zunge 106 und die Rastnase 104 ein sich U-förmig erstreckender Schlitz 118 vorgesehen ist der die Zunge 106 mit der Rastnase 104 freistellt, so dass folglich die Zunge 106 nur einseitig mit einer Zungenwurzel 122 (Fig. 3) mit dem Griffarm 26 verbunden ist und sich somit in einer Federrichtung 124 federnd in der Ausnehmung 116, insbesondere in diese hinein, bewegen kann.

Diese Konstruktion ermöglicht es, die Zunge 106 mit der Rastnase 104 als mit dem Griffarm 26 einstückiges Teil auszubilden, wenn der Betätigungshebel 22 mit dem Griffarm 26 beispielsweise als Kunststoffteil hergestellt ist.

Ist dagegen der Betätigungshebel 22 mit dem Griffarm 26 als Metallteil ausgebildet, so ist die Zunge 106 die Rastnase 104 tragende als federelastisches Element auszubilden und mit dem Betätigungshebel 22, insbesondere dem Griffarm 26, zu verbinden.

Durch das Verrasten des Drehbetätigungselements 92 in den verschiedenen Stellungen lässt sich somit eine einmal vorgegebene Einstellung des Stößels 42 mittels der Gewindeführung 86 und somit die durch den Stößel 42 vorgegebene Position des Kolbens 48 in der durch die Griffweitenverstelleinrichtung 72 vorgegebenen Ausgangsstellung des Betätigungshebels 22 aufrechterhalten, ohne dass eine selbsttätige Veränderung der Position des Stößels 42 erfolgt.

Damit lassen sich insbesondere Anpassungen des Geberzylinders 44 an nehmerseitige Veränderungen, beispielsweise Veränderungen von Bremsbelägen durch Verschleiß, vornehmen.

Wie bereits erwähnt, lässt sich bei der erfindungsgemäßen Gebereinheit 10 auch mittels der Griffweitenverstelleinrichtung 72 im Zusammenwirken mit dem Anschlagarm 66 die Ausgangsstellung des Betätigungshebels 22 und somit eine Griffweite, das heißt der Abstand des Griffarms 26 von dem Lenker 12 einstellen.

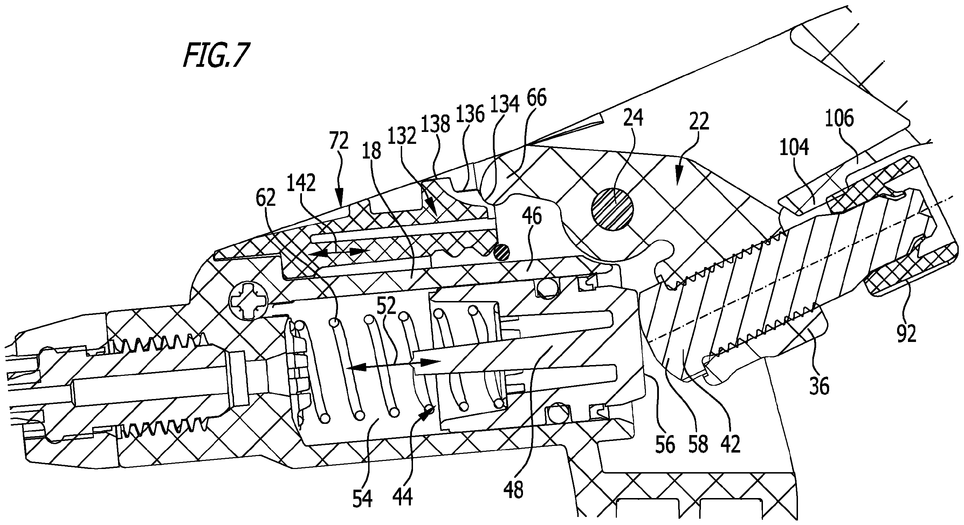

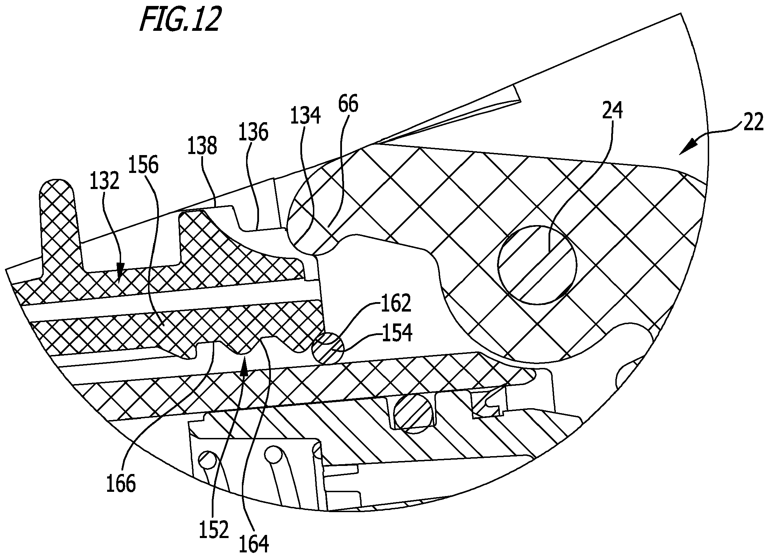

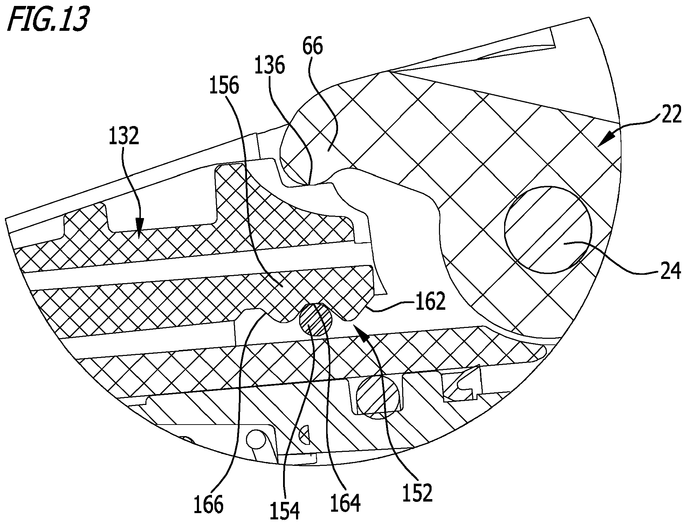

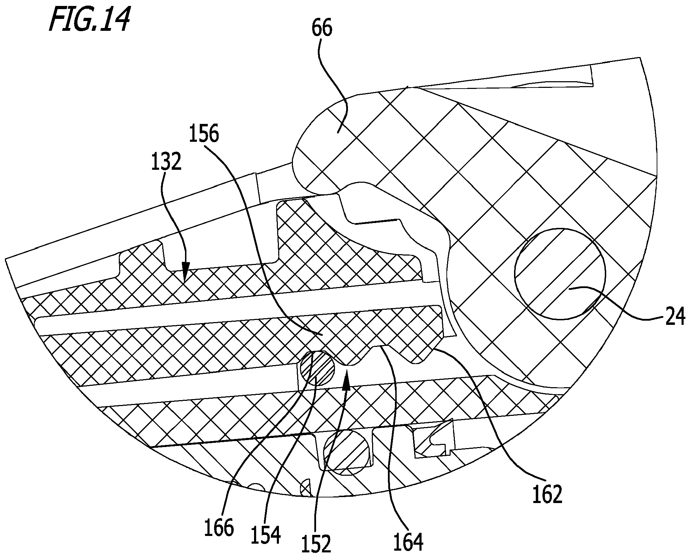

Hierzu ist, wie in den Fig. 7 bis 9 dargestellt, in dem Gehäusekörper 18 ein relativ zu diesem bewegbares Einstellelement 132 vorgesehen, welches, wie in den Fig. 12 bis 15 vergrößert dargestellt, insgesamt drei Anschlagflächen 134, 136 und 138 aufweist, die einzeln durch Bewegen des Einstellelements 132, beispielsweise durch lineares Verschieben desselben in einer Verschieberichtung 142 in eine aktive Stellung bringbar sind, in welcher sie ein Verschwenken des Betätigungshebels 22 entgegengesetzt zur Betätigungsrichtung 32 dadurch begrenzen, dass der Anschlagarm 66 an der jeweils in der aktiven Stellung stehenden Anschlagfläche 134, 136, 138 zur Anlage kommt, wobei dadurch eine Festlegung der jeweiligen Ausgangsstellung des Betätigungshebels 22 erfolgt.

Wie in Fig. 7 und Fig. 2 dargestellt, ist eine erste Anschlagfläche 134 für eine maximale Griffweite, also einen maximalen Abstand des Griffarms 26 von dem Lenker 12 vorgesehen und an dieser ist der Anschlagarm 66 dann anlegbar, wenn das Einstellelement 132 in einer ersten Stellung steht, in welcher dieses einen maximalen Abstand von der Schwenkachse 24 aufweist, so dass der Anschlagarm 66 an der der Schwenkachse 24 nächstliegenden ersten Anschlagfläche 134 aufliegt.

Diese erste Anschlagfläche 134 ist daher so angeordnet, dass sie eine Ausgangsstellung des Griffarms 26 zulässt, die bezogen auf die Schwenkachse 24 einen maximalen Winkelabstand W1 von der Halteeinheit 14 aufweist, wie in Fig. 2 dargestellt.

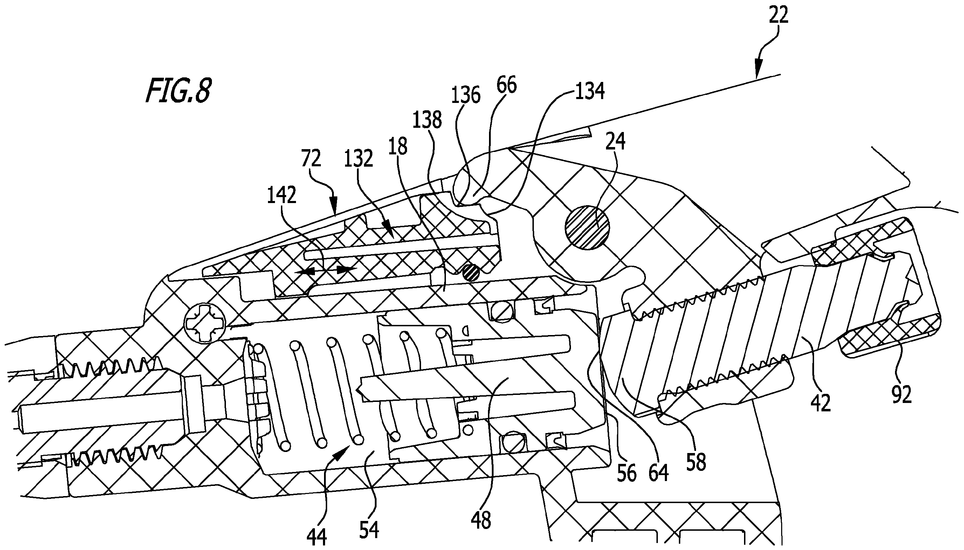

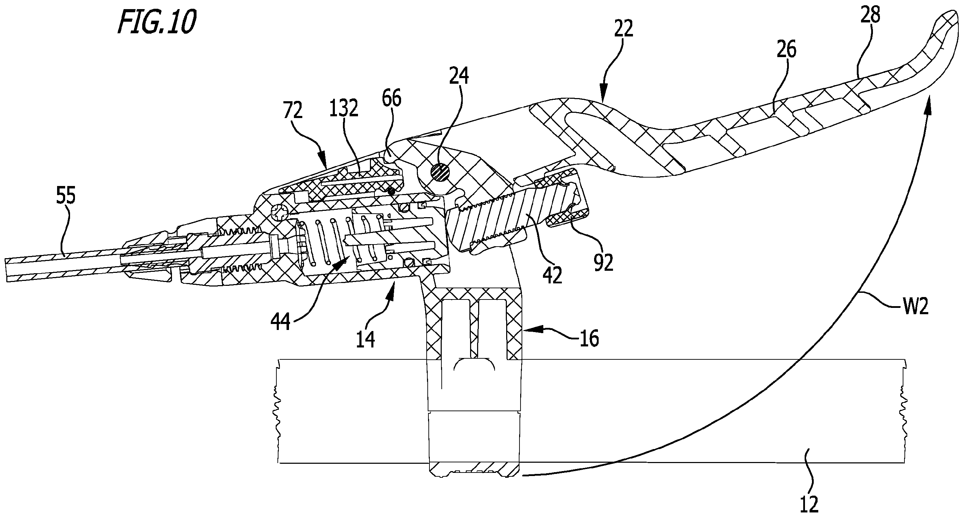

Die zweite Anschlagfläche 136 ist dann wirksam, wenn das Einstellelement 132 ausgehend von der ersten in den Fig. 7 und 2 dargestellten Stellung, in eine zweite, in Fig. 8 und 10 dargestellte und näher an der Schwenkachse 24 liegende Stellung verschoben ist, so dass der Anschlagarm 66 auf dieser zweiten Anschlagfläche 136 aufliegt, wobei diese so angeordnet ist, dass dann, wenn der Anschlagarm 66 auf dieser aufliegt, der Griffarm 26 von der Halteeinheit 16 einen Winkelabstand W2 aufweist, der kleiner ist, als der Winkelabstand W1.

Um die dritte Anschlagfläche 138 in ihre aktive Stellung zu bewegen, ist das Einstellelement 132 soweit in Richtung der Schwenkachse 24 zu verschieben, dass dies die der Schwenkachse 24 nächstliegende Stellung einnimmt.

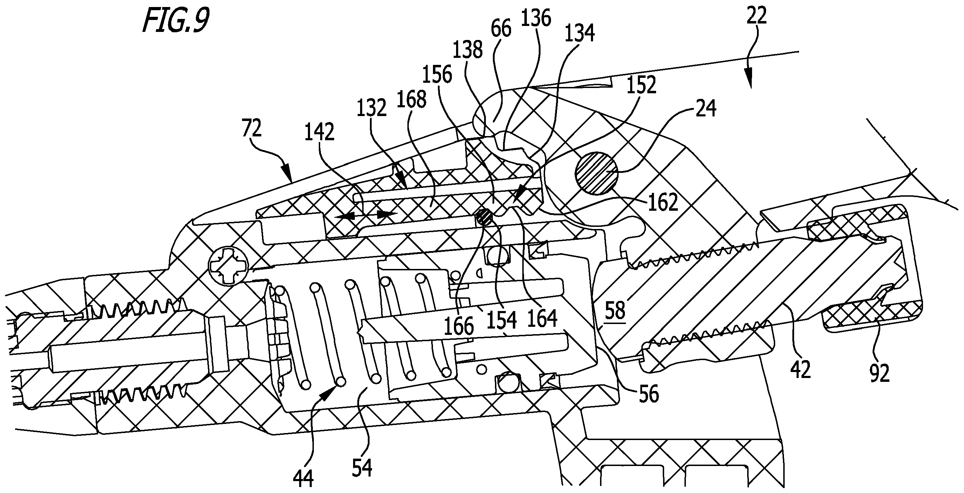

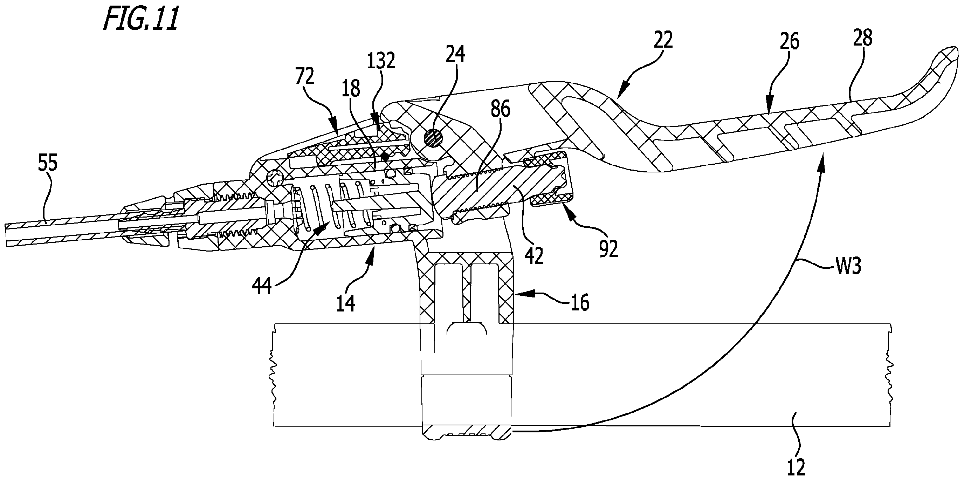

Die dritte Anschlagfläche 138 ist dabei so angeordnet, dass der Winkelabstand W3 zwischen dem Griffarm 26 und der Halteeinheit 16 kleiner ist als der Winkelabstand W2 (Fig. 9 und 11).

Um das Einstellelement 132 in den den verschiedenen Winkelabständen W1, W2, W3 entsprechenden verschiedenen Stellungen, in denen die verschiedenen Anschlagflächen 134, 136 und 138 wirksam sind, sicher positionieren zu können, ist das Einstellelement 132 mit einer als Ganzes mit 152 bezeichneten Rasteinrichtung relativ zum Gehäusekörper 18 verrastbar, welche in Fig. 12 bis 16 dargestellt ist.

Die Rasteinrichtung 152 umfasst dabei ein erstes, beispielsweise mit dem Gehäusekörper 18 verbundenes Rastelement 154, welches als Nocken oder als Stift ausgebildet sein kann und ein zweites Rastelement 156, welches mehrere Rastflächen 162, 164 und 166 aufweist, mit denen das erste Rastelement 154 zusammenwirken kann, um das Einstellelement 132 in den verschiedenen Stellungen, beispielsweise den Winkelabständen W1, bzw. W2, bzw. W3 entsprechenden Stellungen, relativ zum Gehäusekörper 18 festzulegen.

Vorzugsweise ist dabei das zweite Rastelement 156 als an das Einstellelement 132 angeformte federnde Zunge 168 ausgebildet.

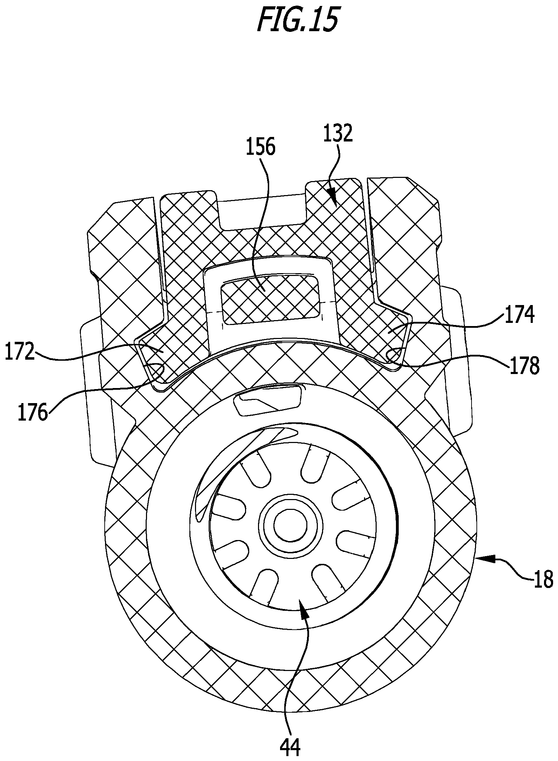

Zur Führung des Einstellelements 132 in dem Gehäusekörper sind, wie in den Fig. 15 und 16 dargestellt, seitlich am Einstellelement 132 liegende Führungskörper 172 und 174 vorgesehen, welche in entsprechende Führungsnuten 176 und 178 des Gehäusekörpers 18 eingreifen und somit das Einstellelement 132 in der Verschieberichtung 142 verschiebbar zwischen den verschiedenen durch die Rasteinrichtung 152 festlegbaren Stellungen führen.

## Patentansprüche

1. Handbetätigte Gebereinheit (10) für Fahrzeuge, insbesondere für lenkergeführte Fahrzeuge, umfassend ein Gehäuse (14), einen in dem Gehäuse (14) vorgesehenen Geberzylinder (44), einen relativ zu dem Gehäuse (14) bewegbaren Betätigungshebel (22) und einen eine Bewegung des Betätigungshebels (22) auf den Geberzylinder (44) übertragenden Stößel (42), der an dem Betätigungshebel (22) gelagert ist,
**dadurch gekennzeichnet, dass** an dem Gehäuse (14) eine Griffweitenverstelleinrichtung (72) für den Betätigungshebel (22) vorgesehen ist, mit welcher eine jeweilige Ausgangsstellung des Betätigungshebels (22) vorgebbar ist, dass die Griffweitenverstelleinrichtung (72) ein relativ zu dem Gehäuse (14) bewegbares Einstellelement (132) umfasst, dass das Einstellelement (132) an dem Gehäuse (14) verschiebbar angeordnet ist, und dass das Einstellelement (132) mindestens eine Anschlagfläche (134, 136, 138) für einen Anschlagarm (66) des Betätigungshebels (22) aufweist.

2. Gebereinheit nach Anspruch 1, **dadurch gekennzeichnet, dass** das Einstellelement (132) relativ zur Schwenkachse (24) des Betätigungshebels (22) in verschiedene einen unterschiedlichen Abstand von der Schwenkachse (24) aufweisenden Stellungen bringbar ist, die verschiedene Ausgangsstellungen festlegen.

3. Gebereinheit nach Anspruch 1 oder 2, **dadurch gekennzeichnet, dass** das Einstellelement (132) verschiedene Anschlagflächen (134, 136, 138) aufweist, die verschiedenen Ausgangsstellungen des Betätigungshebels (22) zugeordnet sind.

4. Gebereinheit nach Anspruch 3, **dadurch gekennzeichnet, dass** durch das Bewegen des Einstellelements (132) jeweils eine der Anschlagflächen (134, 136, 138) in eine mit dem Anschlagarm (66) zusammenwirkende aktive Stellung bringbar ist.

5. Gebereinheit nach einem der Ansprüche 2 bis 4, **dadurch gekennzeichnet, dass** das Einstellelement (132) der Griffweitenverstelleinrichtung (72) durch eine Rasteinrichtung (152) in den verschiedenen Stellungen festlegbar ist.

6. Gebereinheit nach Anspruch 5, **dadurch gekennzeichnet, dass** insbesondere die Rasteinrichtung (152) zwei zusammenwirkende Rastelemente (154, 152) umfasst, von denen eines mit dem Gehäuse (14) und ein anderes mit dem Einstellelement (132) verbunden ist.

7. Gebereinheit nach Anspruch 6, **dadurch gekennzeichnet, dass** ein erstes Rastelement (154) einen Vorsprung aufweist und dass ein zweites Rastelement (156) verschiedene Rastflächen (162, 164, 166) zur Festlegung der verschiedenen Stellungen des Einstellelements (132) aufweist.

8. Gebereinheit nach Anspruch 7, **dadurch gekennzeichnet, dass** eines der Rastelemente (154, 156) eine federnde Zunge (168) umfasst.

9. Gebereinheit nach einem der Ansprüche 2 bis 8, **dadurch gekennzeichnet, dass** das Einstellelement (132) durch eine Führung (172, 174, 176, 178) an dem Gehäuse (14) geführt ist und dass insbesondere die Führung einerseits Führungskörper (172, 174) und andererseits Führungsnuten (176, 178) umfasst.

10. Gebereinheit nach Anspruch 9, **dadurch gekennzeichnet, dass** das Einstellelement (132) durch die Führung (172, 174, 176, 178) in einer Führungsrichtung (142) ungefähr parallel zu dem Geberzylinder (44) bewegbar ist.

11. Gebereinheit nach einem der voranstehenden Ansprüche, dadurch gegenzeichnet, dass der Betätigungshebel (22) in Richtung der jeweiligen Ausgangsstellung federbeaufschlagt und dadurch im unbetätigten Zustand in dieser gehalten ist und dass insbesondere der Betätigungshebel (22) durch den Geberzylinder (44) in Richtung der Ausgangsstellung beaufschlagt ist.

12. Gebereinheit nach einem der voranstehenden Ansprüche, **dadurch gekennzeichnet, dass** der Stößel (42) durch eine Gewindeführung (86) relativ zum Betätigungshebel (22) verstellbar ist, dass die Gewindeführung (86) ein an dem Stößel (42) vorgesehenes Außengewinde (84) umfasst, welches in ein stationär an einem Druckarm (36) des Betätigungshebels (22) angeordnetes Innengewinde eingreift, dass der Stößel (42) ein Drehbetätigungselement (92) aufweist und dass an dem Betätigungshebel (22) ein erstes Rastelement (102) angeordnet ist, welches mit einem zweiten, am Stößel (42) vorgesehenen Rastelement (96) zusammenwirkt und einzelne Drehstellungen des Stößels (42) festlegt.

13. Gebereinheit nach Anspruch 12, **dadurch gekennzeichnet, dass** das zweite Rastelement (96) mit dem Drehbetätigungselement (92) verbunden ist und dass insbesondere das zweite Rastelement (96) an das Drehbetätigungselement (92) angeformt ist.

14. Gebereinheit nach Anspruch 12 oder 13, **dadurch gekennzeichnet, dass** das erste Rastelement (102) eine Rastnase (104) aufweist und dass insbesondere das erste Rastelement (102) eine die Rastnase (104) tragende federnde Zunge (106) aufweist.

15. Gebereinheit nach Anspruch 14, **dadurch gekennzeichnet, dass** das erste Rastelement (102) einstückig an den Betätigungshebel (22) angeformt ist.

## Claims

1. Hand-actuated transmitter unit (10) for vehicles, in particular for handlebar-controlled vehicles, comprising a housing (14), a master cylinder (44) provided in the housing (14), an actuating lever (22) which is movable relative to the housing (14) and a plunger (42) which transmits a movement of the actuating lever (22) to the master cylinder (44) and which is mounted on the actuating lever (22),
**characterised in that** provided on the housing (14) is a reach adjust device (72) for the actuating lever (22) with which a respective starting position of the actuating lever (22) is pre-settable, **in that** the
reach adjust device (72) comprises an adjustment element (132) which is movable on the housing (14), **in that** the adjustment element (132) is displaceably arranged on the housing (14) and **in that** the adjustment element (132) has at least one stop surface (134, 136, 138) for a contact arm (66) of the actuating lever (22).

2. Transmitter unit according to claim 1, **characterised in that** the adjustment element (132) can be brought into different positions relative to the pivot axis (24) of the actuating lever (22), having different spacings from the pivot axis (24), which define different starting positions.

3. Transmitter unit according to claim 1 or 2, **characterised in that** the adjustment element (132) has different stop surfaces (134, 136, 138) which are associated with different starting positions of the actuating lever (22).

4. Transmitter unit according to claim 3, **characterised in that** by means of the movement of the adjustment element (132), one of the respective stop surfaces (134, 136, 138) is movable into an active position cooperating with the contact arm (66).

5. Transmitter unit according to one of claims 2 to 4, **characterised in that** the adjustment element (132) of the reach adjust device (72) is fixable in the different positions by means of a locking device (152).

6. Transmitter unit according to claim 5, **characterised in that** the locking device (152) comprises two cooperating locking elements (154, 152) of which one is connected to the housing (14) and another to the adjustment element (132).

7. Transmitter unit according to claim 6, **characterised in that** a first locking element (154) has a projection and that a second locking element (156) has different locking surfaces (162, 164, 166) for fixing the different positions of the adjustment element (132).

8. Transmitter unit according to claim 7, **characterised in that** one of the locking elements (154, 156) comprises a resilient tongue (168).

9. Transmitter unit according to one of the claims 2 to 8, **characterised in that** the adjustment element (132) is guided by means of a guide (172, 174, 176, 178) on the housing (14) and **in that** in particular the guide comprises on the one hand guide bodies (172, 174) and on the other hand guide grooves (176, 178).

10. Transmitter unit according to claim 9, **characterised in that** the adjustment element (132) is movable by means of the guide (172, 174, 176, 178) in a guide direction (142) approximately parallel to the master cylinder (44).

11. Transmitter unit according to one of the preceding claims, **characterised in that** the actuating lever (22) is spring-loaded in the direction of the respective starting position and is thereby held in said position in the non-actuated state and **in that** in particular the actuating lever (22) is acted upon by the master cylinder (44) in the direction of the starting position.

12. Transmitter unit according to one of the preceding claims, **characterised in that** the plunger (42) is adjustable relative to the actuating lever (22) by means of a threaded guide (86), **in that** the threaded guide (86) comprises an external thread (84) provided on the plunger (42), said thread engaging in an internal thread arranged statically on a pressure arm (36) of the actuating lever (22), **in that** the plunger (42) comprises a rotary control element (92) and **in that** arranged on the actuating lever (22) is a first locking element (102) which cooperates with a second locking element (96) provided on the plunger (42) and defines individual rotary positions of the plunger (42).

13. Transmitter unit according to claim 12, **characterised in that** the second locking element (96) is connected to the rotary control element (92) and **in that** in particular the second locking element (96) is formed onto the rotary control element (92).

14. Transmitter unit according to claim 12 or 13, **characterised in that** the first locking element (102) comprises a locking nose (104) and **in that** in particular the first locking element (102) comprises a resilient tongue (106) which carries the locking nose (104).

15. Transmitter unit according to claim 14, **characterised in that** the first locking element (102) is formed integrally onto the actuating lever (22).

## Revendications

1. Transmetteur (10) manuel pour véhicules, en particulier pour véhicules à volant, comprenant un boîtier (14), un cylindre de transmission (44) prévu dans le boîtier (14), un levier d'actionnement (22) mobile par rapport au boîtier (14) et un poussoir (42) transmettant un mouvement du levier d'actionnement (22) au cylindre de transmission (44), lequel poussoir est positionné sur le levier d'actionnement (22), **caractérisé en ce qu'**il y a, sur le boîtier (14), un dispositif de modification de la largeur de préhension (72) permettant de prédéfinir une position de départ du levier d'actionnement (22), **en ce que** le dispositif de modification de la largeur de préhension (72) comprend un élément de réglage (132) mobile par rapport au boîtier (14), **en ce que** l'élément de réglage (132) est disposé de manière mobile en translation sur le boîtier (14), et **en ce que** l'élément de réglage (132) présente au moins une face de butée (134, 136, 138) pour un bras de butée (66) du levier d'actionnement (22).

2. Transmetteur selon la revendication 1, **caractérisé en ce que** l'élément de réglage (132), peut être amené, par rapport à l'axe de pivotement (24) du levier d'actionnement (22), dans différentes positions présentant une distance différente par rapport à l'axe de pivotement (24) et définissant différentes positions de départ.

3. Transmetteur selon la revendication 1 ou la revendication 2, **caractérisé en ce que** l'élément de réglage (132) présente différentes faces d"appui (134, 136, 138) affectées à différentes positions de départ du levier d'actionnement (22).

4. Transmetteur selon la revendication 3, **caractérisé en ce que** le déplacement de l'élément de réglage (132) permet d'amener respectivement l'une des faces de butée (134, 136, 138) dans une position coopérant avec le bras de butée (66).

5. Transmetteur selon l'une quelconque des revendications 2 à 4, **caractérisé en ce que** l'élément de réglage (132) du dispositif de modification de la largeur de préhension (72) peut être immobilisé dans différentes positions par un dispositif d'encliquetage (152).

6. Transmetteur selon la revendication 5, **caractérisé en ce que**, en particulier, le dispositif d'encliquetage (152) comporte deux éléments d'encliquetage (154, 152) coopérant l'un avec l'autre, dont l'un est relié au boîtier (14) et l'autre à l'élément de réglage (132).

7. Transmetteur selon la revendication 6, **caractérisé en ce qu'**un premier élément d'encliquetage (154) présente une saillie et **en ce qu'**un deuxième élément d'encliquetage (156) présente différentes faces d'encliquetage (162, 164, 166) afin d'immobiliser l'élément de réglage (132) dans différentes positions.

8. Transmetteur selon la revendication 7, **caractérisé en ce que** l'un des éléments d'encliquetage (154, 156) comprend une languette élastique (168).

9. Transmetteur selon l'une quelconque des revendications 2 à 8, **caractérisé en ce que** l'élément de réglage (132) est guidé par une coulisse (172, 174, 176, 178) sur le boîtier (14) et **en ce que**, en particulier, la coulisse comprend, d'une part, des corps de guidage (172, 174) et, d'autre part, des rainures de guidage (176, 178).

10. Transmetteur selon la revendication 9, **caractérisé en ce que** l'élément de réglage (132) peut être déplacé par la coulisse (172, 174, 176, 178) dans un sens de guidage (142) approximativement parallèle au cylindre de transmission (44).

11. Transmetteur selon l'une quelconque des revendications précédentes, **caractérisé en ce que** le levier d'actionnement (22) est soumis à la force d'un ressort dans le sens de la position de départ respective et maintenu de ce fait dans cette position lorsqu'il n'est pas actionné, et **en ce que**, en particulier, le levier d'actionnement (22) est sollicité par le cylindre de transmission (44) dans le sens de la position de départ.

12. Transmetteur selon l'une quelconque des revendications précédentes, **caractérisé en ce que** le poussoir (42) peut être déplacé par une coulisse filetée (86) par rapport au levier d'actionnement (22), **en ce que** la coulisse filetée (86) comprend un filet mâle (84) prévu sur le poussoir (42) et qui entre en prise dans un filet femelle disposé de manière stationnaire sur un bras de pression (36) du levier d'actionnement (22), **en ce que** le poussoir (42) présente un élément d'actionnement (92) et **en ce que**, sur le levier d'actionnement (22), est disposé un premier élément d'encliquetage (102) qui coopère avec un deuxième élément d'encliquetage (96) prévu sur le poussoir (42) et immobilise le poussoir (42) dans différentes positions rotatives.

13. Transmetteur selon la revendication 12, **caractérisé en ce que** le deuxième élément d'encliquetage (96) est relié à l'élément d'actionnement rotatif (92) et **en ce que**, en particulier, le deuxième élément d'encliquetage (96) est aménagé sur l'élément d'actionnement rotatif (92).

14. Transmetteur selon la revendication 12 ou la revendication 13, **caractérisé en ce que** le premier élément d'encliquetage (102) présente un ergot d'encliquetage et **en ce que**, en particulier, le premier élément d'encliquetage (102) présente une languette (106) élastique porteuse.

15. Transmetteur selon la revendication 14, **caractérisé en ce que** le premier élément d'encliquetage (102) est aménagé d'un seul tenant sur le levier d'actionnement (22)
